# EUROPEAN PATENT APPLICATION

(11) **EP 4 254 896 A1**
(43) Date of publication of application: **04.10.2023**
(21) Application number: 23163654.9
(22) Date of filing: 23.03.2023
(51) Int. Cl.: H04L 41/16, G06N 3/00

(54) **COORDINATION OF MODEL TRAININGS FOR FEDERATED LEARNING**

(30) Priority: 29.03.2022 IN 202241018381
(71) Applicant: Nokia Technologies Oy, 02610 Espoo (FI)
(72) Inventor: BUTT, Muhammad Majid, Naperville - IL, 60540 (US); KHARE, Saurabh, 560043 Bangalore (IN); BELLING, Horst Thomas, 85435 Erding (DE); LAIR, Yannick, 78960 Voisins le Bretonneux (FR)
(74) Representative: Nokia EPO representatives

(57) **Abstract**

Method comprising:
receiving information related to an intended federated learning training, wherein the intended federated learning training involves a set of candidate members performing a respective local training;
generating federated learning specific assistance information for the intended federated learning training based on the information related to the intended federated learning training;
providing the federated learning specific assistance information in response to the receiving the information related to the intended federated learning training.

## Description

### Field of the invention

The present disclosure relates to federated learning in communication networks.

### Abbreviations

- 3GPP: 3^{rd} Generation Partnership Project
- 5G/6G/7G: 5^{th}/6^{th}/7^{th} Generation
- 5GC: 5G Core network
- 5GS: 5G System
- AF: Application Function
- Al: Artificial Intelligence
- AMF: Access and Mobility Management Function
- API: Application Programming Interface
- FL: Federated Learning
- GMLC: Gateway Mobile Location Centre
- gNB: gNodeB (5G base station)
- GPSI: Generic Public Subscription Identifer
- ID: Identifier
- ML: Machine Learning
- NF: Network function
- NSACF: Network Slice Access Control Function
- NSSF: Network Slice Selection Function
- NWDAF: Network Data Analytics Function
- OAM: Operations, Administration, and Maintenance
- PCF: Policy Control Function
- QoS: Quality of Service
- RAN: Radio Access Network
- RSRP: Reference Signal Received Power
- RSRQ: Reference Signal Received Quality
- SUPI: Subscription Permanent Identifier
- TR: Technical Report
- TS: Technical Specification
- UDM: User Data Management
- UE: User Equipment

### Background

Many applications in mobile networks require a large amount of data from multiple distributed sources like UEs or distributed gNBs to be used to train a single common model. To minimize the data exchange between the distributed units from where the data is generated and the centralized unit(s) where the common model need to be created, the concept of Federated learning (FL) may be applied. FL is a form of machine learning where, instead of model training at a single node, different versions of the model are trained at the different distributed hosts. This is different from distributed machine learning, where a single ML model is trained at distributed nodes to use computation power of different nodes. In other words, FL is different from distributed learning in the sense that: 1) each distributed node in a FL scenario has its own local training data which may not come from the same distribution as the local training data at other nodes; 2) each node computes parameters for its local ML model and 3) the central host does not compute a version or part of the model but combines parameters of all the distributed models to generate a main model. The objective of this approach is to keep the training dataset where it is generated and perform the model training locally at each individual learner in the federation.

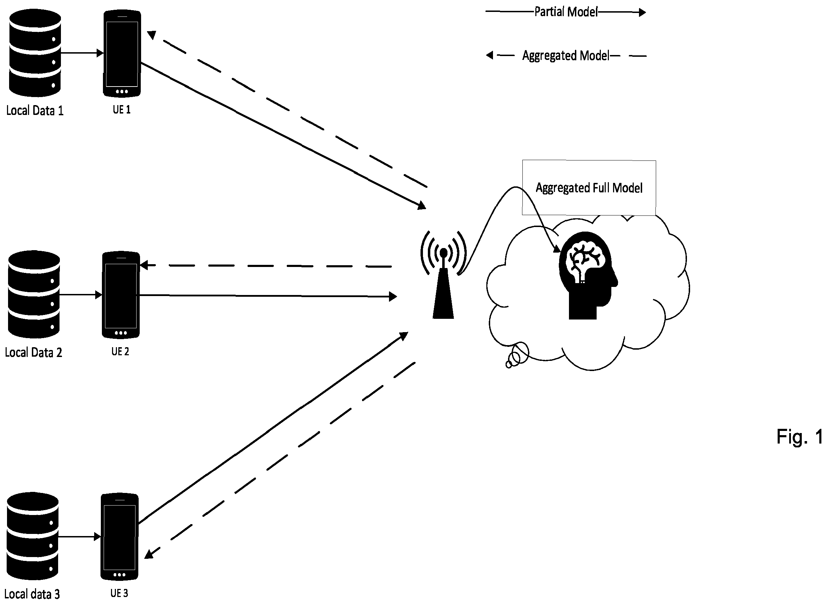

After training a local model, each individual learner transfers its local model parameters, *instead of the (raw) training dataset,* to an aggregating unit. The aggregating unit utilizes the local model parameters to update a global model which may eventually be fed back to the local learners for further iterations until the global model converges. As a result, each local learner benefits from the datasets of the other local learners only through the global model, shared by the aggregator, without explicitly accessing *high volume* of (potentially privacy-sensitive) data available at each of the other local learners. This is illustrated in Fig. 1, where UEs serve as local learners and a gNB functions as an aggregator node. The partial model (from UEs to gNB) and the aggregated model (from gNB to UEs) are both transmitted on regular communication links between the gNB and the UEs.

Summarizing, FL training process can be explained by the following main steps:
- **Initialization:** A machine learning model (e.g., linear regression, neural network) is chosen to be trained on local nodes and initialized.
- **Client selection:** a fraction of local nodes is selected to start training on local data.
   The selected nodes acquire the current statistical model while the others wait for the next federated round.
- **Reporting and Aggregation:** each selected node sends its local model to the central function (may be hosted by a central server) for aggregation. The central function aggregates the received models and sends back the model updates to the nodes.
- **Termination:** once a pre-defined termination criterion is met (e.g., a maximum number of iterations is reached), the central function aggregates the updates and finalizes the global model.

3GPP Study on 5G System Support for AI/ML-based Services (3GPP TR 23.700-80) has agreed on the following related key issues:
1. Key Issue #3: 5GC Information Exposure to authorized 3rd party for Application Layer Al / ML Operation
2. Key Issue #7: 5GS Assistance to Federated Learning

This Key Issue is related to WT#3 from FS_AlMLsys study item (3GPP SP-211648): How to support Horizontal Federated Learning by 5GS, including:
- How to select UEs for FL to avoid degrading of network performance and service experience for clients.
- Whether, how and what information provided by 5GC to the AF can help the AF to select and manage the group of UEs which will be part of FL operation.

It is generally agreed that the FL group management should be controlled and managed by the AF. The question whether, how and what information is required by the 5GC in order to assist the AF for selecting and managing the group of UEs is considered as a part of FL operation.

### Summary

It is an object of the present invention to improve the prior art.

According to a first aspect of the invention, there is provided an apparatus comprising:
one or more processors, and
memory storing instructions that, when executed by the one or more processors, cause the apparatus to perform: providing information related to an intended federated learning training to a network function, wherein the intended federated learning training involves a set of candidate members each performing a respective local training;
receiving, in response to the providing, first federated learning specific assistance information from the network function;
estimating a first expected quality of the intended federated learning training based on the first federated learning specific assistance information;
deciding whether or not to start the intended federated learning training based on the first expected quality of the intended federated learning training.

According to a second aspect of the invention, there is provided an apparatus comprising:
one or more processors, and
memory storing instructions that, when executed by the one or more processors, cause the apparatus to perform: receiving information related to an intended federated learning training, wherein the intended federated learning training involves a set of candidate members performing a respective local training;
generating federated learning specific assistance information for the intended federated learning training based on the information related to the intended federated learning training;
providing the federated learning specific assistance information in response to the receiving the information related to the intended federated learning training.

According to a third aspect of the invention, there is provided an apparatus comprising:
one or more processors, and
memory storing instructions that, when executed by the one or more processors, cause the apparatus to perform: receiving, by a first network function from an application function, information related to an intended federated learning training;
instructing the first network function to provide the information related to the intended federated learning training to a second network function;
receiving, by the first network function, in response to the providing the information related to the intended federated learning training, federated learning specific assistance information from the second network function;
commanding the first network function to forward the federated learning specific assistance information to the application function.

According to a fourth aspect of the invention, there is provided a method comprising:
providing information related to an intended federated learning training to a network function, wherein the intended federated learning training involves a set of candidate members each performing a respective local training;
receiving, in response to the providing, first federated learning specific assistance information from the network function;
estimating a first expected quality of the intended federated learning training based on the first federated learning specific assistance information;
deciding whether or not to start the intended federated learning training based on the first expected quality of the intended federated learning training.

According to a fifth aspect of the invention, there is provided a method comprising:
receiving information related to an intended federated learning training, wherein the intended federated learning training involves a set of candidate members performing a respective local training;
generating federated learning specific assistance information for the intended federated learning training based on the information related to the intended federated learning training;
providing the federated learning specific assistance information in response to the receiving the information related to the intended federated learning training.

According to a sixth aspect of the invention, there is provided a method comprising:
receiving, by a first network function from an application function, information related to an intended federated learning training;
instructing the first network function to provide the information related to the intended federated learning training to a second network function;
receiving, by the first network function, in response to the providing the information related to the intended federated learning training, federated learning specific assistance information from the second network function;
commanding the first network function to forward the federated learning specific assistance information to the application function.

Each of the methods of the fourth to sixth aspects may be a method for assisting federated learning.

According to a seventh aspect of the invention, there is provided a computer program product comprising a set of instructions which, when executed on an apparatus, is configured to cause the apparatus to carry out the method according to any of the fourth to sixth aspects. The computer program product may be embodied as a computer-readable medium or directly loadable into a computer.

According to some embodiments of the invention, at least one of the following advantages may be achieved:
- Results of FL may be closer to expected quality ;
- AF may make a more informed decision on whether or not to start FL;
- Decision whether or not to start FL remains with AF.
   • .

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 illustrates federated learning in a wireless network as an example;
Fig. 2 shows a message flow according to some example embodiments of the invention;
Fig. 3 shows a method according to some example embodiments of the invention;
Fig. 4 shows a message flow according to some example embodiments of the invention;
Fig. 5 shows an apparatus according to an example embodiment of the invention;
Fig. 6 shows a method according to an example embodiment of the invention;
Fig. 7 shows an apparatus according to an example embodiment of the invention;
Fig. 8 shows a method according to an example embodiment of the invention;
Fig. 9 shows an apparatus according to an example embodiment of the invention.
Fig. 10 shows a method according to an example embodiment of the invention; and
Fig. 11 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Federated Learning is a task that requires a lot of communication, which puts a lot of strain on the 5G network. On the other hand, there is a latency constraint for local models collection and aggregation, implying that latency divergence in collecting local models from the local learners needs to be bounded.

The network may support the Federated Learning training to meet the latency constraints. If a network is heavily loaded with network traffic demands, it may not be able to provide FL training services effectively.

Some example embodiments of the invention provide a method how the network can provide assistance to a 3^{rd} party FL model training, which is run in an application function (which may be hosted by an application server) as the central function. Thus, the problem solved by some example embodiments of the invention may be briefly stated as:
Before starting FL training, network and FL application function should exchange some information to decide if network is ready to provide FL training service to the AF, and if not, what level of degradation is expected. (It corresponds to the KI 3 in 3GPP TR 23.700-80 related to AI/ML).

Some example embodiments of the invention provide a framework for this information exchange. Herein, it is assumed that 5G system assists FL application to make a decision, but 5GS is not allowed to make a decision on its own that changes FL training process itself. It is up to the application to decide if FL should be started or some other adaptation needs to be applied before starting FL, but this information can help the application function to meet a more informed/accurate decision.

Before starting FL, 5GS may receive some FL model information to better assist FL. The network assistance process according to some example embodiments of the invention is explained in 5 key actions. Details of these key steps are explained further below.
1. Application function prepares for running FL training by collecting information such as FL aggregated model size, possible FL members, model aggregation latency target in each iteration, expected number of iterations and time interval between iterations, Local model (i.e. model at learner side) size, Time window when FL training should be performed, etc. It runs a candidate selection algorithm.
2. Based on the above information, the application function requests 5GS's assistance. It provides at least one of the following input information to the network about local FL model training:
   - Candidate FL members
   - Local model (i.e. model at learner side) size and aggregated model (i.e.
      model at central side) size (to determine what kind of latency could be provided for this model size)
   - Time window when FL training needs to be performed
   - Expected number of iterations and time interval for each iteration
   - Slice ID
3. Using the input information, network collects FL member data and calculates analytics/prediction, e.g. at least one of:
   - Radio link quality (RSRP) and other radio related parameters for each candidate FL member (e.g. UE or distributed base station)
   - Network capacity estimate in the area for FL training (to support expected traffic caused by FL)
   - UE (non-FL) QoS data requirements, i.e. QoS requirements apart from requirements for FL
   - UE QoS configuration in PCF/SMF or UDM (if UE/members can meet the required QoS in the specified areas, e.g. data volume, bandwidth)
   - User Consent check for each member
4. Network informs the application function on the estimates and analytics results, i.e., Output of the analytics/prediction including at least one of:
   - Candidate members' expected latency performance, given the load on aggregated and local model (including an estimate of latency per iteration as well as average latency).
   - If network is congested, a suggested time window for better result
   - Geographical distribution of the local learners/UEs (in particular if required by the FL model for further processing in candidate selection algorithm)
5. Based on the received information, application function may estimate quality/latency performance of FL model and can take some decision on FL training:
   - Take a Start/Delay FL model training
   - Increase targeted latency per iteration and start FL
   - Decide to add FL members and/or remove some FL members and request assistance from the network for new candidate members
   - Decide to use another FL selection algorithm

All the decisions, except the decision to add new candidate members, in step 5 do not affect 5GS. For this particular decision, network collects analytics for the new candidates and application function evaluates the expected quality of FL model. This iteration could continue until FL is satisfied with the expected quality of FL and decides to take any of the other decisions in the key action 5.

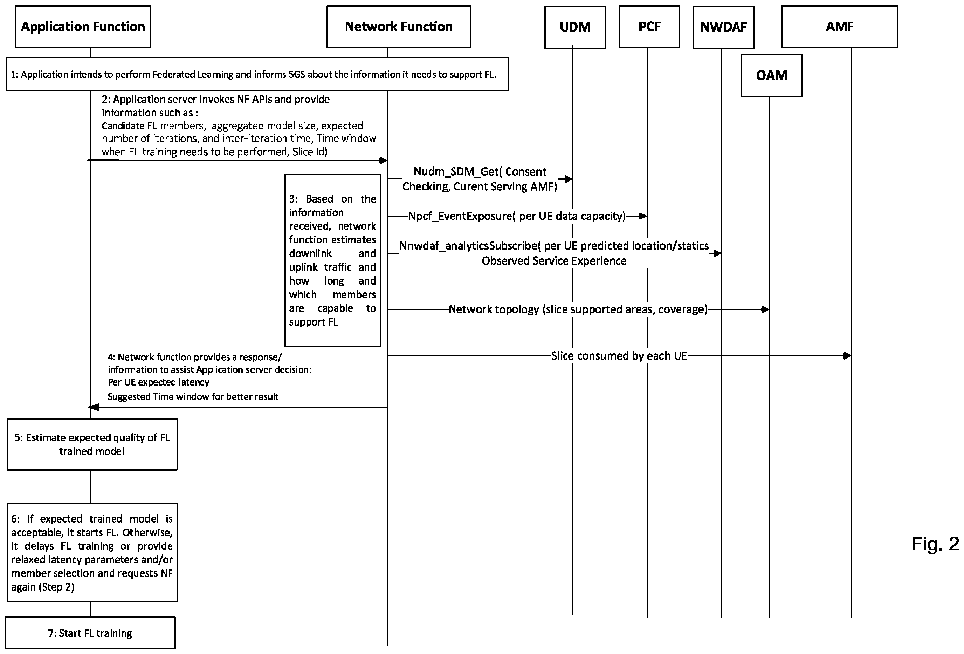

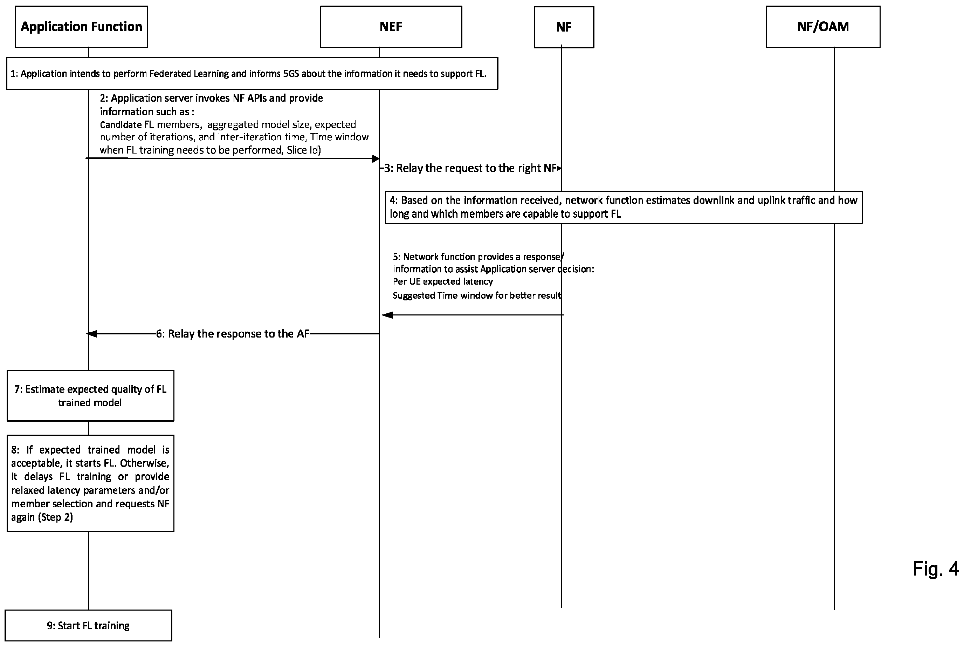

The AF may be trusted or untrusted by the network (5GS). In the trusted case, AF may communicate directly with the NF (Fig. 2), in the untrusted case, AF communicates with the NF via NEF (Fig. 4). Figs. 2 and 4 show respective message flows.

The network assistance framework in 3^{rd} party FL training is described in the following main steps.
1. FL Preparation at the Application Server:
Application function prepares for running an intended FL training by collecting information such as FL aggregated model size, candidate FL members, model aggregation latency target in each iteration, expected number of iterations and time interval between iteration,
Local model size, Time window when FL training needs to be performed, etc. It runs a candidate selection algorithm. Some example candidate selection algorithms are described in PCT/EP2021/087772: "CLUSTER BASED TRAINING HOST SELECTION IN ASYNCHRONOUS FEDERATED LEARNING MODEL COLLECTION"; and PCT/EP2020/080435: METHOD FOR SAMPLING UEs FOR FEDERATED LEARNING MODEL COLLECTION IN WIRELESS NETWORKS ".
2. Network Assistance Request:
Based on the above information, the AF requests assistance by the network (5GS). It provides the at least one of the following pieces of input information to the network about local FL model training (the details will be provided further below)
- Candidate FL members
- Local model size and aggregated model size (to determine what kind of latency could be provided for this model size)
- Time window when FL training should be performed
- Expected number of iterations and time interval between iteration
- Slice ID of the application function (if any)
The rationale behind sending this information is provided in Table 1.

**Table 1: Information provided by AF to 5GS**

| **Input to 5GC (NF hosting the logic)** | **Source** | **Description (why it is required)** |
|---|---|---|
| ML aggregated model size | AF | Model is transferred over 5GC, so knowing the size will help 5GC/NF to evaluate the QoS requirements |
| Candidate FL members Ids | AF | Candidate FL member Ids (SUPI/GPSI). It will be required for 5GC/NF to understand the members involved because FL requires a particular set of FL members (and not any). |
| Expected number of iterations | AF | Example 5000, 10000. |
| Time interval between iteration | AF | Combined with expected number of iterations, determines time needed by FL training |
| Local model size | AF | Determines uplink traffic requirements for UEs |
| Time window when FL training needs to be performed | AF | Preferred FL training time (if AF suggested time window is not acceptable) |
| Slice Id of the AF | AF | Based on model QoS, a particular slice Id |

3. Network Analytics Collection
Network collects data from or about FL members and calculates analytics/prediction. These data may comprise at least one of:
- Radio link quality (RSRP) and other radio related parameters for each candidate UE/member
- Network capacity (to support expected traffic) estimate in the area for FL training
- UE (non-FL) QoS data requirements
- UE QoS configuration in PCF/capability (if UE/members can meet the required QoS (2MBPS) in the specified areas)
- User consent check for each member
This information may be collected from the different network functions, as shown in Table 2.

**Table 2: Data collection by 5GS**

| **Input to 5GC (NF hosting the logic)** | **Source** | **Description (why it is required)** |
|---|---|---|
| ML aggregated model size | AF | Model is transferred over 5GC, so knowing the size will help 5GC/NF to evaluate the QoS requirements |
| Candidate FL members Ids | AF | Candidate FL member Ids (SUPI/GSPI). It will be required for 5GC/NF to understand the members involved because FL requires a particular set of FL members (and not any). |
| Expected number of iterations | AF | Example 5000, 10000. |
| Time interval between iteration | AF | Combined with expected number of iterations, determines time needed by FL training |
| Local model size | AF | Determines uplink traffic requirements for UEs |
| Time window when FL training needs to be performed | AF | Preferred FL training time (if AF suggested time window is not acceptable) |
| Slice Id of the AF | AF | Based on model QoS, a particular slice Id |

Whether or not UE is supporting a Slice can be checked via:
NF can request UDM to get registered AMF details
NF contacts AMF to get to know what slice is used by UE at the current registration. (alternatively, if NSACF is deployed, NSACF can provide a report on what slices are used by UE)
4. Assistance Request Response
Network informs the AF on the output of the analytics/prediction, for example by at least one of the following pieces of information:
- Candidate members' expected latency performance given the network load due to transmission of aggregated model and local models on downlink and uplink, respectively
- If network is congested, a suggested time window for better result
- Geographical distribution of the local learners/UEs (in particular, if required by the FL model for further processing in candidate selection algorithm).
Table 3 shows how this information may be used by the application function to estimate the quality of the intended FL training process.

**Table 3: Usage of the output from NF by the AF**

| **5GC/NF output** | **Description (why it is important)** | |
|---|---|---|
| Per Candidate members' expected latency performance given the aggregated and local model size | Needed to determine in AF: | |
| | | •Expected number of members meeting latency target per iteration (%) |
| | | •Expected number of members not able to meet latency target during FL training process (%) |
| Optional feature: Suggested time window for better result | If network is congested, expected time to improve network | |
| Geographical distribution of the candidate members (UE) | Per tracking area identity UE | |

5. Decision by the application function:
Based on the received information, application function may estimate quality/latency performance of the intended FL model training and can take some decision on FL training. For example:
- Take a Start/Delay FL model training
- Increase targeted latency per iteration and start FL training
- Decide to add and/or remove FL members and request assistance from the network for new candidate members
- Decide to use another FL selection algorithm

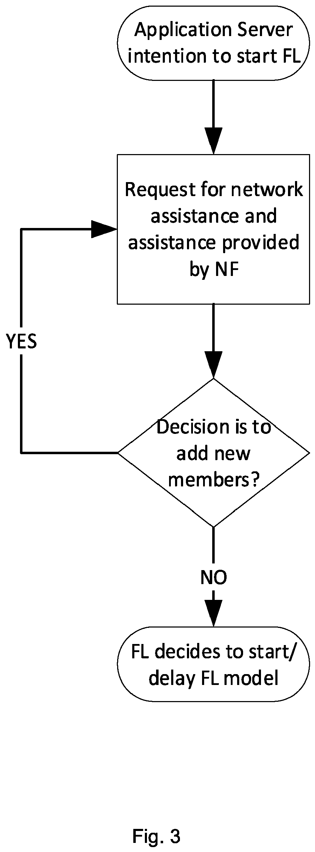

All the decisions, except the decision to add new candidate members, do not affect 5GS. For this particular decision, network collects analytics for the new candidates and application function evaluates expected quality of FL model. As shown in Fig. 3, this iteration may continue until FL is satisfied with the expected quality of FL and decides to take any of the other decisions.

Fig. 4 shows a message flow corresponding to that of Fig. 2, with the difference that AF and NF interaction is via NEF (because AF is untrusted for the network). Therefore, NEF APIs may be enhanced and/or new services may be added in NEF.

In some example embodiments, the NF may be a stand-alone NF dedicated to assisting FL. In some example embodiments, the NF may be hosted by NEF. In some example embodiments, the NF may be hosted by NWDAF. In this case, inquiries to NWDAF, such as those shown in Figs. 2 and 4 are internal within the NWDAF.

5G assistance can help to improve latency performance and reduce its divergence for 3^{rd} party FL training run by an application function. Without 5G assistance, model aggregation in FL could be delayed and some FL members may not be able to provide their local models at all if network is congested. Missing key contributing data from a set of candidate members can result in biased FL aggregated model.

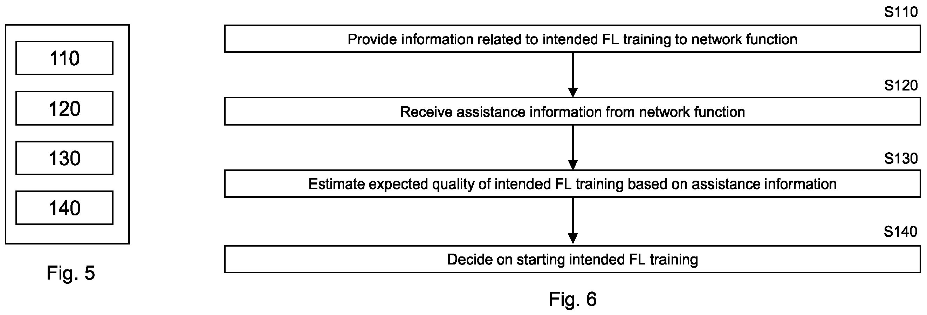

Fig. 5 shows an apparatus according to an example embodiment of the invention. The apparatus may be an AF or an element thereof. Fig. 6 shows a method according to an example embodiment of the invention. The apparatus according to Fig. 5 may perform the method of Fig. 6 but is not limited to this method. The method of Fig. 6 may be performed by the apparatus of Fig. 5 but is not limited to being performed by this apparatus.

The apparatus comprises means for providing 110, means for receiving 120, means for estimating 130, and means for deciding 140. The means for providing 110, means for receiving 120, means for estimating 130, and means for deciding 140, may be a providing means, receiving means, estimating means, and deciding means, respectively. The means for providing 110, means for receiving 120, means for estimating 130, and means for deciding 140, may be a provider, receiver, estimator, and decider, respectively. The means for providing 110, means for receiving 120, means for estimating 130, and means for deciding 140, may be a providing processor, receiving processor, estimating processor, and deciding processor, respectively.

The means for providing 110 provides information related to an intended FL training to a network function (S110). The intended FL training involves a set of candidate members each performing a respective local training. The means for receiving 120 receives, in response to the providing of S110, assistance information from the network function (S120). The assistance information is FL specific assistance information.

Based on the assistance information received in S120, the means for estimating 130 estimates an expected quality of the intended FL training (S130). Based on the expected quality of the intended FL training estimated in S130, the means for deciding 140 decides whether or not to start the intended FL training (S140). For example, if the means for deciding 140 decides in S140 to start the intended FL training, the intended FL training may be started; and/or if the means for deciding 140 decides in S140 not to start the intended FL training, the starting of the FL training may be inhibited.

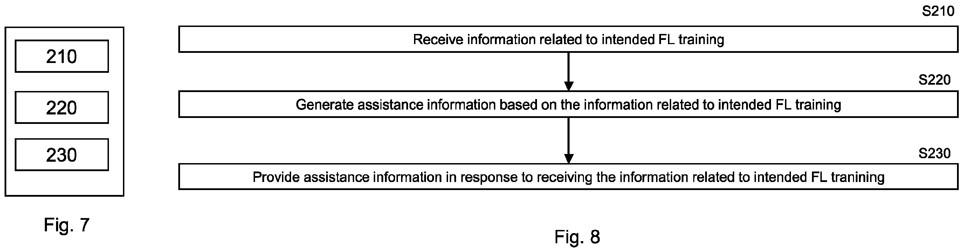

Fig. 7 shows an apparatus according to an example embodiment of the invention. The apparatus may be a NF or an element thereof. Fig. 8 shows a method according to an example embodiment of the invention. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises means for receiving 210, means for generating 220, and means for providing 230. The means for receiving 210, means for generating 220, and means for providing 230 may be a receiving means, generating means, and providing means, respectively. The means for receiving 210, means for generating 220, and means for providing 230 may be a receiver, generator, and provider, respectively. The means for receiving 210, means for generating 220, and means for providing 230 may be a receiving processor, generating processor, and providing processor, respectively.

The means for receiving 210 receives information related to an intended FL training (S210). The intended FL training involves a set of candidate members performing a respective local training.

The means for generating 220 generates assistance information (FL specific assistance information) for the intended FL training based on the information related to the intended FL training (S220). The means for providing 230 provides the assistance information in response to the receiving the information related to the intended FL training of S210 (S230).

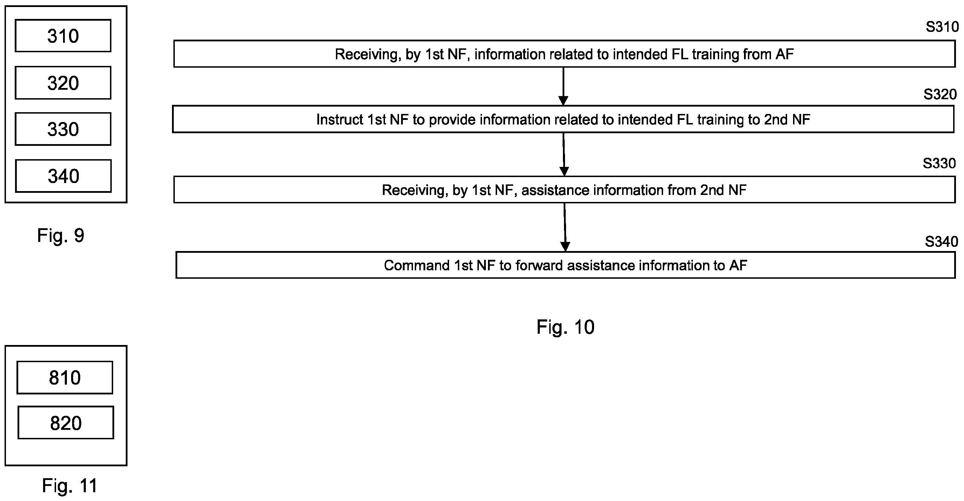

Fig. 9 shows an apparatus according to an example embodiment of the invention. The apparatus may be a NF, such as a NEF, or an element thereof. Fig. 10 shows a method according to an example embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises first means for receiving 310, means for instructing 320, second means for receiving 330, and means for commanding 340. The first means for receiving 310, means for instructing 320, second means for receiving 330, and means for commanding 340 may be a first receiving means, instructing means, second receiving means, and commanding means, respectively. The first means for receiving 310, means for instructing 320, second means for receiving 330, and means for commanding 340 may be a first receiver, instruct, second receiver, and commander, respectively. The first means for receiving 310, means for instructing 320, second means for receiving 330, and means for commanding 340 may be a first receiving processor, instructing processor, second receiving processor, and commanding processor, respectively.

By the first means for receiving 310 a first network function receives, from an application function, information related to an intended FL training (S310). The means for instructing 320 instructs the first network function to provide the information related to the intended FL training to a second network function (S320). The first network function may be a NEF.

By the second means for receiving 330, the first network function receives, in response to the providing of S320, assistance information from the sec.ond network function (S330). The means for commanding 340 commands the first network function to forward the assistance information to the application function (S340). The assistance information is FL specific assistance information.

Fig. 11 shows an apparatus according to an example embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 6, 8, and 10 and related description.

Some example embodiments are explained with respect to a 5G network. However, the invention is not limited to 5G. It may be used in other communication networks allowing FL by some of its members, too, e.g. in previous of forthcoming generations of 3GPP networks such as 4G, 6G, or 7G, etc. It may be used in non-3GPP mobile communication networks and wired communication networks, too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

Further aspects and examples are described in the following:
Example 1. Apparatus comprising:
   one or more processors, and
   memory storing instructions that, when executed by the one or more processors, cause the apparatus to perform: providing information related to an intended federated learning training to a network function, wherein the intended federated learning training involves a set of candidate members each performing a respective local training;
   receiving, in response to the providing, first federated learning specific assistance information from the network function;
   estimating a first expected quality of the intended federated learning training based on the first federated learning specific assistance information;
   deciding whether or not to start the intended federated learning training based on the first expected quality of the intended federated learning training.
Example 2. The apparatus according to Example 1, wherein at least one of the following is valid:
   the network function is a stand-alone network function dedicated to assisting the federated learning training;
   the network function is comprised by a network exposure function; and
   the network function is comprised by a network data analytics function.
Example 3. The apparatus according to any of Examples 1 and 2, wherein the information related to the intended federated learning training comprises at least one of:
   the candidate members ;
   a size of an aggregated model of the intended federated learning training;
   a size of a local model of at least one of the local trainings;
   an expected number of iterations to be performed by each of the candidate members when performing the respective local training;
   for each of the candidate members: a time interval between each of the iterations to be performed by the respective candidate member; and
   an identifier of a network slice supporting the apparatus.
Example 4. The apparatus according to any of Examples 1 to 3, wherein the first federated learning specific assistance information comprises at least one of
   for each of the candidate members of the set of the candidate members: an expected latency for performing at least one iteration of the local training by the respective candidate member;
   for each of the candidate members of the set of the candidate members: an expected average latency for performing plural iterations of the local training by the respective candidate member;
   for each of the candidate members of the set of the candidate members: an expected average latency for providing a result of an iteration of the local training to the apparatus;
   a suggested time window for performing the federated learning training; and
   a geographical distribution of the candidate members.
Example 5. The apparatus according to any of Examples 1 to 4, wherein the instructions, when executed by the one or more processors, further cause the apparatus to perform at least one of:
   starting the intended federated learning training if it is decided to start the intended federated learning training; and
   inhibiting the starting the intended federated learning training if it is decided not to start the intended federated learning training.
Example 6. The apparatus according to Example 5, wherein the instructions, when executed by the one or more processors, further cause the apparatus to perform if it is decided not to start the intended federated learning training:
   requesting second federated learning specific assistance information for the intended federated learning training under the assumption that at least one further candidate member not belonging to the set of candidate members performs the respective local training;
   receiving, in response to the providing, the second federated learning specific assistance information from the network function;
   estimating a second expected quality of the intended federated learning training based on the second federated learning specific assistance information;
   deciding whether or not to start the intended federated learning training based on the second expected quality of the intended federated learning training;
   starting the intended federated learning training if it is decided to start the intended federated learning training.
Example 7. Apparatus comprising:
   one or more processors, and
   memory storing instructions that, when executed by the one or more processors, cause the apparatus to perform: receiving information related to an intended federated learning training, wherein the intended federated learning training involves a set of candidate members performing a respective local training;
   generating federated learning specific assistance information for the intended federated learning training based on the information related to the intended federated learning training;
   providing the federated learning specific assistance information in response to the receiving the information related to the intended federated learning training.
Example 8. The apparatus according to Example 7, wherein the generating the federated learning specific assistance information comprises at least one of:
   for each of the candidate members, checking whether there is a consent to perform the respective local training;
   for each of the candidate members, obtaining a current location of the respective candidate member;
   for each of the candidate members, estimating a future location of the respective candidate member for the time when the respective local training is to be performed;
   for each of the candidate members, a respective data capacity for performing the respective local training and/or for transmitting a result of the respective local training;
   for each of the candidate members, estimating a radio link quality at the current location of the respective candidate member and/or at the future location of the respective candidate member;
   for each of the candidate members, checking if a slice supports the current location of the respective candidate member and/or the future location of the respective candidate member, wherein the information related to the intended federated learning training comprises an identifier of the slice;
   for each of the candidate members, checking if the slice supports the respective candidate member.
Example 9. The apparatus according to any of Examples 7 and 8, wherein the information related to the intended federated learning training comprises at least one of:
   the candidate members of the set of candidate members;
   a size of an aggregated model of the intended federated learning training;
   a size of a local model of at least one of the local trainings;
   an expected number of iterations to be performed by each of the candidate members when performing the respective local training;
   for each of the candidate members: a time interval between each of the iterations to be performed by the respective candidate member; and
   an identifier of a network slice.
Example 10. The apparatus according to any of Examples 7 to 9, wherein the federated learning specific assistance information comprises at least one of
   for each of the candidate members of the set of the candidate members: an expected latency for performing at least one iteration of the local training by the respective candidate member;
   for each of the candidate members of the set of the candidate members: an expected average latency for performing plural iterations of the local training by the respective candidate member;
   for each of the candidate members of the set of the candidate members: an expected average latency for providing a result of an iteration of the local training to the apparatus;
   a suggested time window for performing the federated learning training; and
   a geographical distribution of the candidate members.
Example 11. The apparatus according to any of Examples 7 to 10, wherein at least one of
   the apparatus is comprised in a stand-alone network function dedicated to assisting the federated learning training; and
   the apparatus is comprised in a network data analytics function.
Example 12. Apparatus comprising:
   one or more processors, and
   memory storing instructions that, when executed by the one or more processors, cause the apparatus to perform: receiving, by a first network function from an application function, information related to an intended federated learning training;
   instructing the first network function to provide the information related to the intended federated learning training to a second network function;
   receiving, by the first network function, in response to the providing the information related to the intended federated learning training, federated learning specific assistance information from the second network function;
   commanding the first network function to forward the federated learning specific assistance information to the application function.
Example 13. The apparatus according to Example 12, wherein the information related to the intended federated learning training comprises at least one of:
   the candidate members of the set of candidate members;
   a size of an aggregated model of the intended federated learning training;
   a size of a local model of at least one of the local trainings;
      an expected number of iterations to be performed by each of the candidate members when performing the respective local training;
   for each of the candidate members: a time interval between each of the iterations to be performed by the respective candidate member; and
   an identifier of a network slice.
Example 14. The apparatus according to any of Examples 12 to 13, wherein the federated learning specific assistance information comprises at least one of
   for each of the candidate members of the set of the candidate members: an expected latency for the local training to be performed by the respective candidate member;
   a suggested time window for performing the local trainings by the candidate members; and
   a geographical distribution of the candidate members.
Example 15. The apparatus according to any of Examples 12 to 14, wherein the first network function is a network exposure function.
Example 16. Method comprising:
   providing information related to an intended federated learning training to a network function, wherein the intended federated learning training involves a set of candidate members each performing a respective local training;
   receiving, in response to the providing, first federated learning specific assistance information from the network function;
   estimating a first expected quality of the intended federated learning training based on the first federated learning specific assistance information;
   deciding whether or not to start the intended federated learning training based on the first expected quality of the intended federated learning training.
Example 17. The method according to Example 16, wherein at least one of the following is valid:
   the network function is a stand-alone network function dedicated to assisting the federated learning training;
   the network function is comprised by a network exposure function; and
   the network function is comprised by a network data analytics function.
Example 18. The method according to any of Examples 16 and 17, wherein the information related to the intended federated learning training comprises at least one of:
   the candidate members ;
   a size of an aggregated model of the intended federated learning training;
   a size of a local model of at least one of the local trainings;
   an expected number of iterations to be performed by each of the candidate members when performing the respective local training;
   for each of the candidate members: a time interval between each of the iterations to be performed by the respective candidate member; and
   an identifier of a network slice supporting an apparatus performing the method.
Example 19. The method according to any of Examples 16 to 18, wherein the first federated learning specific assistance information comprises at least one of
   for each of the candidate members of the set of the candidate members: an expected latency for performing at least one iteration of the local training by the respective candidate member;
   for each of the candidate members of the set of the candidate members: an expected average latency for performing plural iterations of the local training by the respective candidate member;
   for each of the candidate members of the set of the candidate members: an expected average latency for providing a result of an iteration of the local training to the method;
   a suggested time window for performing the federated learning training; and a geographical distribution of the candidate members.
Example 20. The method according to any of Examples 16 to 19, further comprising at least one of:
   starting the intended federated learning training if it is decided to start the intended federated learning training; and
   inhibiting the starting the intended federated learning training if it is decided not to start the intended federated learning training.
Example 21. The method according to Example 20, further comprising if it is decided not to start the intended federated learning training:
   requesting second federated learning specific assistance information for the intended federated learning training under the assumption that at least one further candidate member not belonging to the set of candidate members performs the respective local training;
   receiving, in response to the providing, the second federated learning specific assistance information from the network function;
   estimating a second expected quality of the intended federated learning training based on the second federated learning specific assistance information;
   deciding whether or not to start the intended federated learning training based on the second expected quality of the intended federated learning training;
   starting the intended federated learning training if it is decided to start the intended federated learning training.
Example 22. Method comprising:
   receiving information related to an intended federated learning training, wherein the intended federated learning training involves a set of candidate members performing a respective local training;
   generating federated learning specific assistance information for the intended federated learning training based on the information related to the intended federated learning training;
   providing the federated learning specific assistance information in response to the receiving the information related to the intended federated learning training.
Example 23. The method according to Example 22, wherein the generating the federated learning specific assistance information comprises at least one of:
   for each of the candidate members, checking whether there is a consent to perform the respective local training;
   for each of the candidate members, obtaining a current location of the respective candidate member;
   for each of the candidate members, estimating a future location of the respective candidate member for the time when the respective local training is to be performed;
   for each of the candidate members, a respective data capacity for performing the respective local training and/or for transmitting a result of the respective local training;
   for each of the candidate members, estimating a radio link quality at the current location of the respective candidate member and/or at the future location of the respective candidate member;
   for each of the candidate members, checking if a slice supports the current location of the respective candidate member and/or the future location of the respective candidate member, wherein the information related to the intended federated learning training comprises an identifier of the slice;
   for each of the candidate members, checking if the slice supports the respective candidate member.
Example 24. The method according to any of Examples 22 and 23, wherein the information related to the intended federated learning training comprises at least one of:
   the candidate members of the set of candidate members;
   a size of an aggregated model of the intended federated learning training;
   a size of a local model of at least one of the local trainings;
   an expected number of iterations to be performed by each of the candidate members when performing the respective local training;
   for each of the candidate members: a time interval between each of the iterations to be performed by the respective candidate member; and
   an identifier of a network slice.
Example 25. The method according to any of Examples 22 to 24, wherein the federated learning specific assistance information comprises at least one of
   for each of the candidate members of the set of the candidate members: an expected latency for performing at least one iteration of the local training by the respective candidate member;
   for each of the candidate members of the set of the candidate members: an expected average latency for performing plural iterations of the local training by the respective candidate member;
   for each of the candidate members of the set of the candidate members: an expected average latency for providing a result of an iteration of the local training to an apparatus performing the method;
   a suggested time window for performing the federated learning training; and
   a geographical distribution of the candidate members.
Example 26. The method according to any of Examples 22 to 25, wherein at least one of
   the method is performed by a stand-alone network function dedicated to assisting the federated learning training; and
   the method is performed by a network data analytics function.
Example 27. Method comprising:
   receiving, by a first network function from an application function, information related to an intended federated learning training;
   instructing the first network function to provide the information related to the intended federated learning training to a second network function;
   receiving, by the first network function, in response to the providing the information related to the intended federated learning training, federated learning specific assistance information from the second network function;
   commanding the first network function to forward the federated learning specific assistance information to the application function.
Example 28 The method according to Example 27, wherein the information related to the intended federated learning training comprises at least one of:
   the candidate members of the set of candidate members;
   a size of an aggregated model of the intended federated learning training;
   a size of a local model of at least one of the local trainings;
      an expected number of iterations to be performed by each of the candidate members when performing the respective local training;
   for each of the candidate members: a time interval between each of the iterations to be performed by the respective candidate member; and
   an identifier of a network slice.
Example 29. The method according to any of Examples 27 to 28, wherein the federated learning specific assistance information comprises at least one of
   for each of the candidate members of the set of the candidate members: an expected latency for the local training to be performed by the respective candidate member;
   a suggested time window for performing the local trainings by the candidate members; and
   a geographical distribution of the candidate members.
Example 30. The method according to any of Examples 27 to 29, wherein the first network function is a network exposure function.
Example 31. A computer program product comprising a set of instructions which, when executed on an apparatus, is configured to cause the apparatus to carry out the method according to any of Examples 16 to 30.
Example 32. The computer program product according to Example 31, embodied as a computer-readable medium or directly loadable into a computer.

According to the above description, it should thus be apparent that example embodiments of the present invention provide, for example, an application function or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a network function or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a network exposure function or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The phrase "at least one of A and B" comprises the options only A, only B, and both A and B. The terms "first X" and "second X" include the options that "first X" is the same as "second X" and that "first X" is different from "second X", unless otherwise specified.

## Claims

1. Apparatus configured to perform:
providing information related to an intended federated learning training to a network function, wherein the intended federated learning training involves a set of candidate members each performing a respective local training;
receiving, in response to the providing, first federated learning specific assistance information from the network function;
estimating a first expected quality of the intended federated learning training based on the first federated learning specific assistance information;
deciding whether or not to start the intended federated learning training based on the first expected quality of the intended federated learning training.

2. The apparatus according to claims 1, wherein the information related to the intended federated learning training comprises at least one of:
the candidate members ;
a size of an aggregated model of the intended federated learning training;
a size of a local model of at least one of the local trainings;
an expected number of iterations to be performed by each of the candidate members when performing the respective local training;
for each of the candidate members: a time interval between each of the iterations to be performed by the respective candidate member; and
an identifier of a network slice supporting the apparatus.

3. The apparatus according to any of claims 1 to 2, wherein the first federated learning specific assistance information comprises at least one of
for each of the candidate members of the set of the candidate members: an expected latency for performing at least one iteration of the local training by the respective candidate member;
for each of the candidate members of the set of the candidate members: an expected average latency for performing plural iterations of the local training by the respective candidate member;
for each of the candidate members of the set of the candidate members: an expected average latency for providing a result of an iteration of the local training to the apparatus;
a suggested time window for performing the federated learning training; and
a geographical distribution of the candidate members.

4. Apparatus configured to perform:
receiving information related to an intended federated learning training, wherein the intended federated learning training involves a set of candidate members performing a respective local training;
generating federated learning specific assistance information for the intended federated learning training based on the information related to the intended federated learning training;
providing the federated learning specific assistance information in response to the receiving the information related to the intended federated learning training.

5. The apparatus according to claim 4, wherein the generating the federated learning specific assistance information comprises at least one of:
for each of the candidate members, checking whether there is a consent to perform the respective local training;
for each of the candidate members, obtaining a current location of the respective candidate member;
for each of the candidate members, estimating a future location of the respective candidate member for the time when the respective local training is to be performed;
for each of the candidate members, a respective data capacity for performing the respective local training and/or for transmitting a result of the respective local training;
for each of the candidate members, estimating a radio link quality at the current location of the respective candidate member and/or at the future location of the respective candidate member;
for each of the candidate members, checking if a slice supports the current location of the respective candidate member and/or the future location of the respective candidate member, wherein the information related to the intended federated learning training comprises an identifier of the slice;
for each of the candidate members, checking if the slice supports the respective candidate member.

6. The apparatus according to any of claims 4 and 5, wherein the information related to the intended federated learning training comprises at least one of:
the candidate members of the set of candidate members;
a size of an aggregated model of the intended federated learning training;
a size of a local model of at least one of the local trainings;
an expected number of iterations to be performed by each of the candidate members when performing the respective local training;
for each of the candidate members: a time interval between each of the iterations to be performed by the respective candidate member; and
an identifier of a network slice.

7. The apparatus according to any of claims 4 to 6, wherein the federated learning specific assistance information comprises at least one of
for each of the candidate members of the set of the candidate members: an expected latency for performing at least one iteration of the local training by the respective candidate member;
for each of the candidate members of the set of the candidate members: an expected average latency for performing plural iterations of the local training by the respective candidate member;
for each of the candidate members of the set of the candidate members: an expected average latency for providing a result of an iteration of the local training to the apparatus;
a suggested time window for performing the federated learning training; and
a geographical distribution of the candidate members.

8. Apparatus configured to perform:
receiving, by a first network function from an application function, information related to an intended federated learning training;
instructing the first network function to provide the information related to the intended federated learning training to a second network function;
receiving, by the first network function, in response to the providing the information related to the intended federated learning training, federated learning specific assistance information from the second network function;
commanding the first network function to forward the federated learning specific assistance information to the application function.

9. The apparatus according to claim 8, wherein the information related to the intended federated learning training comprises at least one of:
the candidate members of the set of candidate members;
a size of an aggregated model of the intended federated learning training;
a size of a local model of at least one of the local trainings; an expected number of iterations to be performed by each of the candidate members when performing the respective local training;
for each of the candidate members: a time interval between each of the iterations to be performed by the respective candidate member; and
an identifier of a network slice.

10. The apparatus according to any of claims 8 to 9, wherein the federated learning specific assistance information comprises at least one of
for each of the candidate members of the set of the candidate members: an expected latency for the local training to be performed by the respective candidate member;
a suggested time window for performing the local trainings by the candidate members; and
a geographical distribution of the candidate members.

11. Method comprising:
providing information related to an intended federated learning training to a network function, wherein the intended federated learning training involves a set of candidate members each performing a respective local training;
receiving, in response to the providing, first federated learning specific assistance information from the network function;
estimating a first expected quality of the intended federated learning training based on the first federated learning specific assistance information;
deciding whether or not to start the intended federated learning training based on the first expected quality of the intended federated learning training.

12. Method comprising:
receiving information related to an intended federated learning training, wherein the intended federated learning training involves a set of candidate members performing a respective local training;
generating federated learning specific assistance information for the intended federated learning training based on the information related to the intended federated learning training;
providing the federated learning specific assistance information in response to the receiving the information related to the intended federated learning training.

13. The method according claim 12, wherein the federated learning specific assistance information comprises at least one of
for each of the candidate members of the set of the candidate members: an expected latency for performing at least one iteration of the local training by the respective candidate member;
for each of the candidate members of the set of the candidate members: an expected average latency for performing plural iterations of the local training by the respective candidate member;
for each of the candidate members of the set of the candidate members: an expected average latency for providing a result of an iteration of the local training to an apparatus performing the method;
a suggested time window for performing the federated learning training; and
a geographical distribution of the candidate members.

14. Method comprising:
receiving, by a first network function from an application function, information related to an intended federated learning training;
instructing the first network function to provide the information related to the intended federated learning training to a second network function;
receiving, by the first network function, in response to the providing the information related to the intended federated learning training, federated learning specific assistance information from the second network function;
commanding the first network function to forward the federated learning specific assistance information to the application function.

15. A computer program product comprising a set of instructions which, when executed on an apparatus, is configured to cause the apparatus to carry out the method according to any of claims 11 to 14.
